# EUROPEAN PATENT APPLICATION

(11) **EP 4 089 960 A1**
(43) Date of publication of application: **16.11.2022**
(21) Application number: 20911853.8
(22) Date of filing: 29.09.2020
(51) Int. Cl.: H04L 12/24

(54) **METHOD AND DEVICE FOR ACQUIRING DATA**

(30) Priority: 10.01.2020 CN 202010027261
(71) Applicant: Huawei Technologies Co., Ltd., Shenzhen, Guangdong 518129 (CN)
(72) Inventor: WANG, Jianbing, Shenzhen, Guangdong 518129 (CN); QIN, Xiaopeng, Shenzhen, Guangdong 518129 (CN); YANG, Yu, Shenzhen, Guangdong 518129 (CN); WANG, Zitao, Shenzhen, Guangdong 518129 (CN); WU, Qin, Shenzhen, Guangdong 518129 (CN)
(74) Representative: Epping - Hermann - Fischer
(86) International application number: PCT/CN2020/118621
(87) International publication number: WO 2021/139260

(57) **Abstract**

Embodiments of this application disclose a data obtaining method. A first device serving as a network management device may generate a first message including a first keyword. The first message is used to indicate a second device to determine a first path in which the second device stores a parameter determined by the first keyword, and send the first path to the first device. The second device may be a device managed by the first device. Then, the first device may send the first message to the second device. After receiving the first message, the second device may determine the first path in which the second device stores the parameter determined by the first keyword, add the determined first path to a second message, and send the second message to the first device. Compared with querying a product manual of the second device by network management personnel, determining the first path by the second device based on the first keyword has higher efficiency. Therefore, according to this application, efficiency of determining the first path can be improved, and correspondingly, efficiency of generating a subscription request by the first device can be improved.

## Description

This application claims priority to Chinese Patent Application No. 202010027261.8, filed with the China National Intellectual Property Administration on January 10, 2020 and entitled "DATA OBTAINING METHOD AND APPARATUS", which is incorporated herein by reference in its entirety.

### TECHNICAL FIELD

This application relates to the device management field, and in particular, to a data obtaining method and apparatus.

### BACKGROUND

A network management device can control and manage a device. The network management device and the device may interact with each other by using a network configuration protocol (Network Configuration Protocol, NETCONF) or a representational state transfer configuration protocol (Representational State Transfer Configuration Protocol, RESTCONF). The NETCONF supports a subscription (subscription) notification (notification) mechanism that is based on a YANG data model. Specifically, YANG-push (Push) provides a subscription push mechanism, and the network management device may send a subscription request to the device by using the mechanism. The subscription request is used to indicate the device to report data to the network management device.

The subscription request sent by the network management device to the device may include an extensible markup language (extensible markup language, XML) path language (XML path language, XPath). The XPath is used to indicate a path in which the device stores the to-be-reported data. Currently, a manner of determining the XPath causes comparatively low efficiency of generating the subscription request by the network management device.

### SUMMARY

Embodiments of this application provide a data obtaining method, so that efficiency of determining a path in which a device stores to-be-reported data can be improved, thereby improving efficiency of generating a subscription request by a network management device.

According to a first aspect, an embodiment of this application provides a data obtaining method. The method may be performed by a first device, and the first device may be a network management device. Specifically, the first device serving as the network management device may generate a first message. The first message includes a first keyword. The first message is used to indicate a second device to determine a first path in which the second device stores a parameter determined by the first keyword, and send the first path to the first device. The second device mentioned herein may be a device managed by the first device serving as the network management device. Then, the first device serving as the network management device may send the first message to the second device. After receiving the first message, the second device may determine the first path in which the second device stores the parameter determined by the first keyword, add the determined first path to a second message, and send the second message to the first device. Compared with querying a product manual of the second device by network management personnel, determining the first path by the second device based on the first keyword has higher efficiency. Therefore, according to the solution in this embodiment of this application, efficiency of determining the first path can be improved, and correspondingly, efficiency of generating a subscription request by the first device serving as the network management device can be improved.

In a possible implementation, in addition to the first keyword, the first message may further include a second keyword. When delivered from a factory, the second device is configured as having both a path used to store the parameter determined by the first keyword and a path used to store a parameter determined by the second keyword. In addition, the two paths are usually different paths. In this embodiment of this application, if the first message includes the first keyword and the second keyword, the second device may determine one path based on each of the first keyword and the second keyword, where one path is used to store the parameter determined by the first keyword, and the other path is used to store the parameter determined by the second keyword. The second device may send both the two paths to the first device. It can be understood that, if the first device receives the two paths, the first device may generate one subscription request for each path separately. In this manner, a comparatively large quantity of input output (input output, 10) resources of the first device are occupied. To improve this situation, the second device may place the parameter determined by the first keyword and the parameter determined by the second keyword together into the first path. In other words, the first path may include the parameter determined by the first keyword and the parameter determined by the second keyword. In this case, if the first device generates a subscription request based on the first path, the second device may report, based on the subscription request, the parameter determined by the first keyword, and may also report the parameter determined by the second keyword.

In a possible implementation, after the second device receives the second message that includes the first path, the first device may generate a third message that includes the first path, and send the third message to the second device. The third message is used to indicate the second device to report a parameter set obtained based on the first path to the first device. The parameter set includes one or more parameters. Specifically, if the first message includes the first keyword, the third message is used to indicate the second device to report the parameter determined by the first keyword to the first device; or if the first message includes the first keyword and the second keyword, the third message is used to indicate the second device to report the parameter determined by the first keyword and the parameter determined by the second keyword to the first device.

According to a second aspect, an embodiment of this application provides a data obtaining method. The method may be performed by a second device, and the second device is a device managed by a first device serving as a network management device. Specifically, the second device may receive a first message from the first device. The first message includes a first keyword. The first message is used to indicate the second device to determine a first path based on the first keyword and send the first path to the first device. The first path mentioned herein is a path in which the second device stores a parameter determined by the first keyword. After receiving the first message, the second device may determine the first path based on the first keyword, add the determined first path to a second message, and send the second message to the first device. Compared with querying a product manual of the second device by network management personnel, determining the first path by the second device based on the first keyword has higher efficiency. Therefore, according to the solution in this embodiment of this application, efficiency of determining the first path can be improved, and correspondingly, efficiency of generating a subscription request by the network management device can be improved.

In a possible implementation, in addition to the first keyword, the first message may further include a second keyword. In this case, the first path may include not only the parameter determined by the first keyword but also a parameter determined by the second keyword. When the first path includes not only the parameter determined by the first keyword but also the parameter determined by the second keyword, there may be a plurality of implementations for determining the first path by the second device.

In a possible implementation, the parameter determined by the first keyword is originally stored in the first path. In other words, the first path is a path that is factory-configured for the second device to store the parameter determined by the first keyword. In this case, the second device may determine the first path based on the first keyword, where the first path is used to store the parameter determined by the first keyword. After the second device determines the first path, because the parameter determined by the second keyword is not originally stored in the first path, the second device may obtain, based on the second keyword, the parameter determined by the second keyword, and then store the parameter determined by the second keyword into the first path. For example, the first device may determine a second path based on the second keyword, read, from the second path, the parameter determined by the second keyword, and store the read parameter into the first path. The second path is used to store the parameter determined by the second keyword.

In a possible implementation, the parameter determined by the second keyword is originally stored in the first path. In other words, the first path is a path that is factory-configured for the second device to store the parameter determined by the second keyword. In this case, the second device may determine a second path based on the second keyword, where the second path is used to store the parameter determined by the second keyword. In this case, the second path is the first path. Because the parameter determined by the first keyword is not originally stored in the first path, the second device may store the parameter determined by the first keyword into the second path. For example, the second device may determine a third path based on the first keyword, read, from the third path, the parameter determined by the first keyword, and store the read parameter into the second path. The third path is used to store the parameter determined by the first keyword.

In a possible implementation, neither the parameter determined by the first keyword nor the parameter determined by the second keyword is originally stored in the first path. In other words, the first path is neither a path that is factory-configured for the second device to store the parameter determined by the first keyword, nor a path that is factory-configured for the second device to store the parameter determined by the second keyword. In this case, the second device may obtain the first path, for example, the second device may generate the first path. In addition, the second device may determine, based on the second keyword, the parameter determined by the second keyword, determine, based on the first keyword, the parameter determined by the first keyword, and store both the parameter determined by the second keyword and the parameter determined by the first keyword into the first path. For example, the second device may determine a second path based on the second keyword, and determine a third path based on the first keyword, where the second path is used to store the parameter determined by the second keyword, and the third path is used to store the parameter determined by the first keyword. Then, the second device reads, from the third path, the parameter determined by the first keyword, reads, from the second path, the parameter determined by the second keyword, and stores the read parameter determined by the first keyword and the read parameter determined by the second keyword into the first path, thereby obtaining the first path that includes not only the parameter determined by the first keyword but also the parameter determined by the second keyword.

According to a third aspect, an embodiment of this application provides a data obtaining apparatus. The apparatus includes: a generation unit, configured to generate a first message, where the first message includes a first keyword; a sending unit, configured to send the first message to a second device; and a receiving unit, configured to receive a second message sent by the second device, where the second message includes a first path, and the first path is used to store a parameter determined by the first keyword.

In a possible implementation, the first message further includes a second keyword, and the first path is further used to store a parameter determined by the second keyword.

In a possible implementation, the generation unit is further configured to generate a third message, where the third message includes the first path, the third message is used to indicate the first device to report a parameter set obtained based on the first path, and the parameter set includes one or more parameters; and the sending unit is further configured to send the third message to the second device.

According to a fourth aspect, an embodiment of this application provides a data obtaining apparatus. The apparatus includes: a receiving unit, configured to receive a first message from a first device, where the first message includes a first keyword; an obtaining unit, configured to obtain a first path, where the first path is used to store a parameter determined by the first keyword; and a sending unit, configured to send a second message to the first device, where the second message includes the first path.

In a possible implementation, the first message further includes a second keyword, and the obtaining unit is specifically configured to: obtain the first path based on the first keyword; and store a parameter determined by the second keyword into the first path.

In a possible implementation, the first message further includes a second keyword, and the obtaining unit is specifically configured to: determine a second path based on the second keyword, where the second path is used to store a parameter determined by the second keyword; and store the parameter determined by the first keyword into the second path, where the second path is the first path.

In a possible implementation, the first message further includes a second keyword, and the obtaining unit is specifically configured to: obtain, based on the first keyword, the parameter determined by the first keyword; obtain, based on the second keyword, a parameter determined by the second keyword; and store the parameter determined by the first keyword and the parameter determined by the second keyword into the first path.

According to a fifth aspect, an embodiment of this application provides a data obtaining device. The device includes a processor and a memory. The memory is configured to store instructions, and the processor is configured to execute the instructions in the memory, to perform the method according to any possible implementation of the first aspect or the method according to any possible implementation of the second aspect.

According to a sixth aspect, an embodiment of this application further provides a computer-readable storage medium, including instructions. When the instructions are run on a computer, the computer is enabled to perform the method according to any possible implementation of the first aspect or the method according to any possible implementation of the second aspect.

According to a seventh aspect, an embodiment of this application provides a computer program product including instructions. When the instructions are run on a computer, the computer is enabled to perform the method according to any possible implementation of the first aspect or the method according to any possible implementation of the second aspect.

### BRIEF DESCRIPTION OF DRAWINGS

To describe technical solutions in the embodiments of this application or in the prior art more clearly, the following briefly describes accompanying drawings used in describing the embodiments or the prior art. Clearly, the accompanying drawings in the following descriptions show some embodiments of this application, and persons of ordinary skill in the art may still derive other drawings from these accompanying drawings without creative efforts.
FIG. 1 is a schematic diagram of a network scenario;
FIG. 2 is a diagram of signaling interaction of a data obtaining method according to an embodiment of this application;
FIG. 3a is a schematic diagram of a first message including a YANG data model according to an embodiment of this application;
FIG. 3b is a schematic diagram of a first message including a YANG data model according to an embodiment of this application;
FIG. 4a is a schematic diagram of a correspondence between a keyword and a path that are expressed by using a YANG data model according to an embodiment of this application;
FIG. 4b is a schematic diagram of a correspondence between a keyword and a path that are expressed by using a YANG data model according to an embodiment of this application;
FIG. 5 is a schematic diagram of a YANG data model according to an embodiment of this application;
FIG. 6a is a schematic diagram of a second message including a path expressed by using a YANG data model according to an embodiment of this application;
FIG. 6b is a schematic diagram of an XML of a second message including a YANG data model according to an embodiment of this application;
FIG. 6c is a schematic diagram of an XML of a second message including a YANG data model according to an embodiment of this application;
FIG. 7 is a schematic diagram of a structure of a data obtaining apparatus according to an embodiment of this application;
FIG. 8 is a schematic diagram of a structure of a data obtaining apparatus according to an embodiment of this application; and
FIG. 9 is a schematic diagram of a structure of a data obtaining device according to an embodiment of this application.

### DESCRIPTION OF EMBODIMENTS

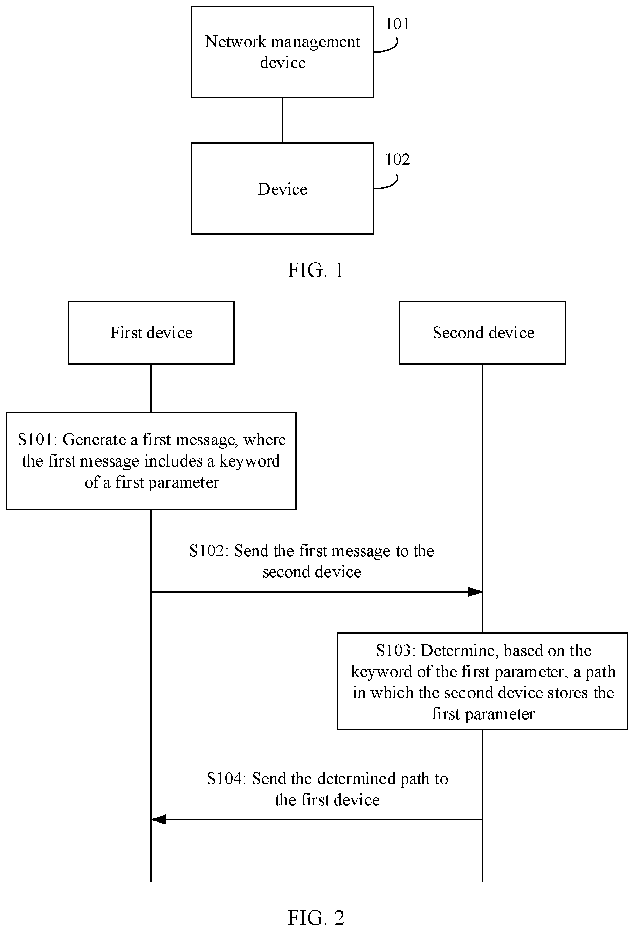

In a network scenario shown in FIG. 1, a network management device 101 can control and manage a device 102.

The network management device 101 and the device 102 may interact with each other by using the NETCONF or the RESTCONF. The NETCONF supports a subscription notification mechanism that is based on a YANG data model. Specifically, YANG-push provides a subscription push mechanism, and the network management device 101 may send a subscription request to the device 102 by using the mechanism. The subscription request is used to indicate the device 102 to report data to the network management device 101. If the network management device 101 sends, to the device 102, a subscription request for indicating the device 102 to report a first parameter, the subscription request may carry an XPath, and the XPath is used to indicate a path in which the device 102 stores the first parameter. Currently, network management personnel may query a product manual of the device 102 to obtain the XPath, and then the network management device 101 generates the subscription request based on the XPath. There is a large amount of data in the product manual of the device 102, and therefore, manually querying the large amount of data to obtain the XPath corresponding to the first parameter has comparatively low efficiency. This correspondingly causes comparatively low efficiency of generating the subscription request by the network management device 101. An XML format is used for the subscription request.

To resolve the foregoing problem, an embodiment of this application provides a data obtaining method. In the method, a first device serving as a network management device may generate a first message. The first message includes a first keyword. The first message is used to indicate a second device to determine a first path based on the first keyword and send the first path to the first device. The first path mentioned herein is used to store a parameter determined by the first keyword. The first device may be used as the network management device, and the second device is a device managed by the first device. The first device may send the first message to the second device. After receiving the first message, the second device may determine the first path based on the first keyword, add the determined first path to a second message, and send the second message to the first device. According to the method, efficiency of determining the first path can be improved, thereby improving efficiency of generating a subscription request by the network management device.

The first device in this embodiment of this application is a device running a network management protocol. The first device may be an apparatus, for example, a control device, a server, or a network management device, that can manage and control a device. The second device mentioned in this embodiment of this application may be a network device such as a router or a switch, or may be a terminal device. Details are not enumerated herein. The first device can manage and control one or more devices, and the one or more devices include the second device. The NETCONF or the RESTCONF may be used for communication between the first device and the second device. The first device in this embodiment of this application may be the network management device 101 in FIG. 1. The second device in this embodiment of this application may be the device 102 in FIG. 1.

A data obtaining method provided in this application is described below with reference to FIG. 2. FIG. 2 is a diagram of signaling interaction of a data obtaining method according to an embodiment of this application. The method shown in FIG. 2 may be implemented, for example, by performing S101 to S104.

S101: A first device generates a first message, where the first message includes a first keyword.

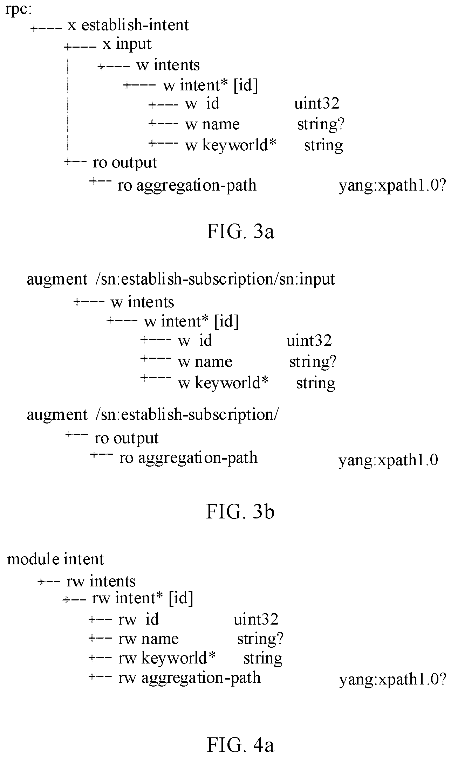

For example, that a first device generates a first message includes: The first device obtains the first keyword, and the first device generates the first message based on the first keyword. The first keyword mentioned in this embodiment of this application may be a parameter index, a parameter expression, or a parameter identifier. In other words, a parameter may be determined based on the first keyword. In this embodiment of this application, the first message may be used to determine a first path. The first path mentioned herein is used to store the parameter determined by the first keyword. When to-be-collected data is uplink traffic and an uplink packet quantity of an application, the first keyword includes one or more of an application program identifier, the uplink traffic, the uplink packet quantity, a destination port, and a next-hop address. When to-be-collected data is downlink traffic and a downlink packet quantity of an application, the first keyword includes one or more of an application program identifier, the downlink traffic, the downlink packet quantity, and a source port. When to-be-collected data is uplink and downlink traffic and uplink and downlink packet quantities, the first keyword includes a source IP address, an application program identifier, the uplink traffic, the uplink packet quantity, the downlink traffic, and the downlink packet quantity. An application program identified by the application program identifier is run on a second device. That the first device obtains the first keyword includes: The first device may obtain the first keyword by using a human-computer interaction interface. In this embodiment of this application, the first message may include, for example, the first keyword expressed by using a YANG data model. For example, reference may be made to FIG. 3a and FIG. 3b. FIG. 3a and FIG. 3b are schematic diagrams of the first message including the YANG data model according to this embodiment of this application.

In FIG. 3a and FIG. 3b:
"id" is used to index the first keyword;
"name" is used to carry a name of the parameter determined by the first keyword, and "name" is an optional parameter;
"keyword" is used to carry the first keyword; and
"aggregation-path" is used to carry the first path.

A difference between FIG. 3a and FIG. 3b lies in that "augment /sn: establish-subscription" in FIG. 3b indicates that an original YANG-push subscription model between the first device and the second device is extended and a function indicated by the first message is inserted into a location of the original YANG-push model, whereas FIG. 3a indicates that a new subscription model is established.

S102: The first device sends the first message to the second device.

The first device may send the first message to the second device by using the NETCONF.

S103: The second device obtains the first path, where the first path is used to store the parameter determined by the first keyword.

After receiving the first message, the second device may parse the first message to obtain the first keyword included in the first message. After obtaining the first keyword, the second device may determine the first path in which the second device stores the parameter determined by the first keyword. With regard to the first path, it should be noted that the first path may be a path that is factory-configured for the second device to store the parameter determined by the first keyword, or may be a path that is generated by the second device after the second device is delivered from a factory and that is used to store the parameter determined by the first keyword. If the first path may be the path that is factory-configured for the second device to store the parameter determined by the first keyword, the second device may, for example, perform retrieval by using the first keyword as a retrieval keyword, to obtain the first path. For another example, the second device may store a correspondence between a keyword and a path, and the correspondence includes at least a correspondence between the first keyword and the first path. After determining the first keyword, the second device may obtain the first path based on the correspondence. The first path mentioned in this embodiment of this application may be an XPath corresponding to the parameter determined by the first keyword. If the first path is the path that is generated by the second device after the second device is delivered from the factory and that is used to store the parameter determined by the first keyword, the second device may generate the first path according to a specific rule, and store the parameter determined by the first keyword into the first path.

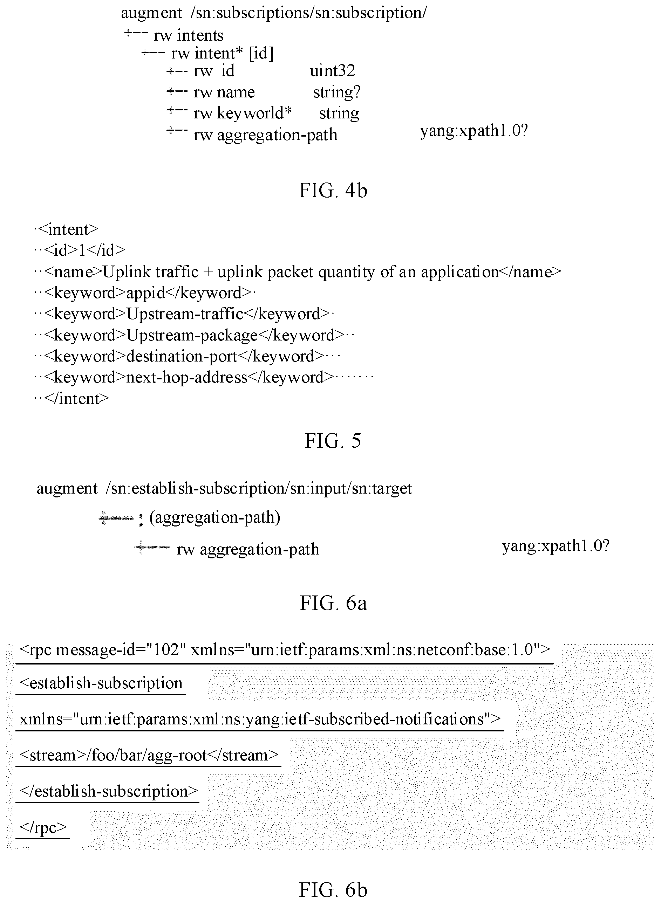

In this embodiment of this application, the foregoing correspondence between a keyword and a path may be expressed by using a YANG data model. Specifically, reference may be made to FIG. 4a and FIG. 4b. FIG. 4a and FIG. 4b are schematic diagrams of the correspondence, between a keyword and a path, expressed by using the YANG data model according to this embodiment of this application.

In FIG. 4a and FIG. 4b:
"id" is used to index the keyword;
"name" is used to carry a name of a parameter determined by the keyword, and "name" is an optional parameter;
"keyword" is used to carry the keyword; and
"aggregation-path" is used to carry the path.

A difference between FIG. 4a and FIG. 4b lies in that "augment /sn: establish-subscription" in FIG. 4b indicates that the YANG data model is added to an original path for storing a subscription report model, whereas FIG. 4a indicates that the YANG data model is added to a new path.

In an implementation of this embodiment of this application, FIG. 4a corresponds to FIG. 3a described above, and FIG. 4b corresponds to FIG. 3b described above. If the YANG data model stored in the second device is shown in FIG. 4a, the first message may be shown in FIG. 3a. If the YANG data model stored in the second device is shown in FIG. 4b, the first message may be shown in FIG. 3b. In some embodiments, the YANG data model shown in FIG. 4a or FIG. 4b may be configured on the second device when the second device is delivered from the factory.

S104: The second device sends a second message to the first device, where the second message includes the first path. After the second device adds the determined first path to the second message and sends the second message to the first device, the first device obtains the path in which the second device stores the parameter determined by the first keyword.

In an implementation of this embodiment of this application, in addition to the first keyword, keywords carried in the first message may further include a second keyword. Although both FIG. 3a and FIG. 3b show only "keyword" used to carry the first keyword, "keyword" is shown merely for ease of understanding. In actual application, the YANG data model included in the first message may include "keyword" carrying the second keyword, and even include "keyword" carrying a third keyword and a fourth keyword. For example, reference may be made to FIG. 5 for understanding. FIG. 5 is a schematic diagram of a structure of a YANG data model according to an embodiment of this application. The YANG data model shown in FIG. 5 may be included in the foregoing first message. The YANG data model shown in FIG. 5 includes four keywords, namely, "Upstream-traffic", "Upstream-package", "destination-port", and "next-hop-address". "Upstream-traffic" is used to carry uplink traffic, "Upstream-package" is used to carry an uplink packet quantity, that is, a quantity of data packets included in the uplink traffic, "destination-port" is used to carry a destination port, and "next-hop-address" is used to carry a next-hop address. The next-hop address mentioned herein is a next-hop Internet protocol (Internet Protocol, IP) address.

In this embodiment of this application, the second keyword is another keyword different from the first keyword. Similar to the first keyword, the second keyword is also a parameter index. In other words, a corresponding parameter may be determined based on the second keyword. The second device has a path for storing the parameter determined by the second keyword. In some embodiments, the parameter determined by the first keyword and the parameter determined by the second keyword may be of a same parameter type. For example, if the parameter type is uplink and downlink traffic of an application program, the first keyword may be the uplink traffic, and the second keyword is the downlink traffic. For the first keyword, the second keyword, and parameter types corresponding to the first keyword and the second keyword, refer to Table 1 below for understanding.

**Table 1**

| Parameter type | Keyword |
|---|---|
| Uplink traffic and an uplink packet quantity of an application | Application program identifier |
| | Uplink traffic |
| | Uplink packet quantity |
| | Destination port |
| | Next-hop address |
| Downlink traffic and a downlink packet quantity of an application | Application program identifier |
| | Downlink traffic |
| | Downlink packet quantity |
| | Source port |
| Guest application (uplink and downlink traffic and uplink and downlink packet quantities) | Source IP |
| | Application program identifier |
| | Uplink traffic |
| | Uplink packet quantity |
| | Downlink traffic |
| | Downlink packet quantity |

As shown in Table 1, when the parameter type is "uplink traffic and an uplink packet quantity of an application", there may be the following several keywords: "application program identifier", "uplink traffic", "uplink packet quantity", "destination port", and "next-hop address". The first keyword may be one of the several keywords, and the second keyword may be one of the several keywords. Correspondingly, for the parameter type "downlink traffic and a downlink packet quantity of an application", there may be the following several keywords: "application program identifier", "downlink traffic", "downlink packet quantity", and "source". The first keyword may be one of the several keywords, and the second keyword may be one of the several keywords.

Generally, when delivered from the factory, the second device is configured as having both the path used to store the parameter determined by the first keyword and the path used to store the parameter determined by the second keyword. In addition, the two paths are usually different paths. In this embodiment of this application, if the first message includes the first keyword and the second keyword, the second device may determine one path based on each of the first keyword and the second keyword, where one path is used to store the parameter determined by the first keyword, and the other path is used to store the parameter determined by the second keyword. The second device may send both the two paths to the first device. It can be understood that, if the first device receives the two paths, the first device may generate one subscription request for each path separately. In this manner, a comparatively large quantity of input output (input output, 10) resources of the first device are occupied. To improve this situation, the second device may place the parameter determined by the first keyword and the parameter determined by the second keyword together into the first path. In other words, the first path may include the parameter determined by the first keyword and the parameter determined by the second keyword. In this case, if the first device generates a subscription request based on the first path, the second device may report, based on the subscription request, the parameter determined by the first keyword, and may also report the parameter determined by the second keyword.

When the first path includes not only the parameter determined by the first keyword but also the parameter determined by the second keyword, there may be a plurality of implementations for obtaining the first path by the second device. First implementation: The parameter determined by the first keyword is originally stored in the first path. In other words, the first path is the path that is factory-configured for the second device to store the parameter determined by the first keyword. In this case, the second device may determine the first path based on the first keyword, where the first path is used to store the parameter determined by the first keyword. After the second device determines the first path, because the parameter determined by the second keyword is not originally stored in the first path, the second device may obtain, based on the second keyword, the parameter determined by the second keyword, and then store the parameter determined by the second keyword into the first path. For example, the first device may determine a second path based on the second keyword, read, from the second path, the parameter determined by the second keyword, and store the read parameter into a third path. The second path is used to store the parameter determined by the second keyword.

Second implementation: The parameter determined by the second keyword is originally stored in the first path. In other words, the first path is the path that is factory-configured for the second device to store the parameter determined by the second keyword. In this case, the second device may determine a second path based on the second keyword, where the second path is used to store the parameter determined by the second keyword. In this case, the second path is the first path. Because the parameter determined by the first keyword is not originally stored in the first path, the second device may store the parameter determined by the first keyword into the second path. For example, the second device may determine a third path based on the first keyword, read, from the third path, the parameter determined by the first keyword, and store the read parameter into the second path. The third path is used to store the parameter determined by the first keyword.

Third implementation: Neither the parameter determined by the first keyword nor the parameter determined by the second keyword is originally stored in the first path. In other words, the first path is neither the path that is factory-configured for the second device to store the parameter determined by the first keyword, nor the path that is factory-configured for the second device to store the parameter determined by the second keyword. In this case, the second device may obtain the first path, for example, the second device may generate the first path. In addition, the second device may determine, based on the second keyword, the parameter determined by the second keyword, determine, based on the first keyword, the parameter determined by the first keyword, and store both the parameter determined by the second keyword and the parameter determined by the first keyword into the first path. For example, the second device may determine a second path based on the second keyword, and determine a third path based on the first keyword, where the second path is used to store the parameter determined by the second keyword, and the third path is used to store the parameter determined by the first keyword. Then, the second device reads, from the third path, the parameter determined by the first keyword, reads, from the second path, the parameter determined by the second keyword, and stores the read parameter determined by the first keyword and the read parameter determined by the second keyword into the first path, thereby obtaining the first path that includes not only the parameter determined by the first keyword but also the parameter determined by the second keyword.

Specific implementations in which the second device determines the third path based on the first keyword and determines the second path based on the second keyword are similar. An example in which the second device determines the third path based on the first keyword is used for description below. For example, the second device may perform retrieval by using the first keyword as a retrieval keyword, to obtain the third path. For another example, the second device may store the correspondence, between a keyword and a path, shown in FIG. 4a and FIG. 4b, and the correspondence includes at least a correspondence between the first keyword and the third path. After determining the first keyword, the second device may obtain the first path based on the correspondence.

After the second device receives the second message that includes the first path, in some embodiments, the first device may generate a third message that includes the first path, and send the third message to the second device. The third message is used to indicate the second device to report a parameter set obtained based on the first path to the first device. The parameter set includes one or more parameters. Specifically, if the first message includes the first keyword, the third message is used to indicate the second device to report the parameter determined by the first keyword to the first device; or if the first message includes the first keyword and the second keyword, the third message is used to indicate the second device to report the parameter determined by the first keyword and the parameter determined by the second keyword to the first device.

In this embodiment of this application, the third message may include the first path expressed by using a YANG data model. Reference may be made to FIG. 6a. FIG. 6a is a schematic diagram of the third message including the path expressed by using the YANG data model according to this embodiment of this application. In FIG. 6a, "aggregation-path" is used to carry the first path. The first device may send the third message to the second device by using the NETCONF.

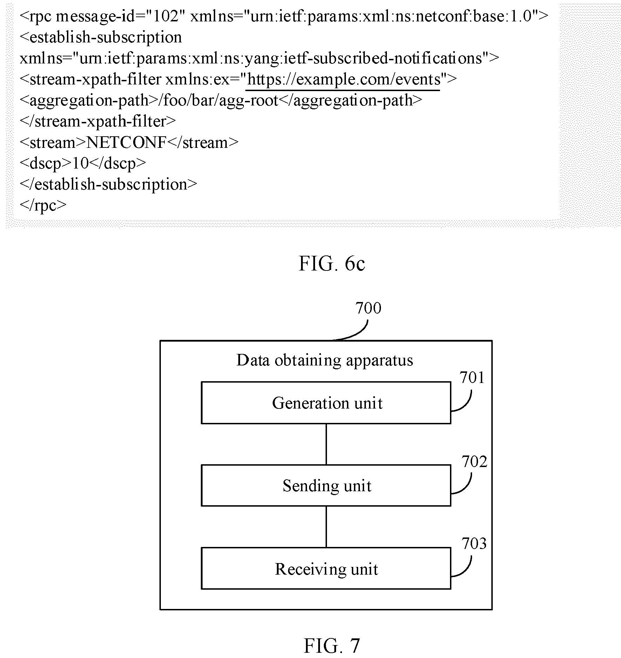

As described above, the third message carries the first path. In an implementation, the first device may add, by using a conventional YANG data model used to create a subscription request, the first path to the parameter indicating the XPath, that is, add the first path to a stream of a YANG data model instance. Reference may be made to FIG. 6b for understanding. FIG. 6b is a schematic diagram of an XML of the third message including the YANG data model according to this embodiment of this application. "/foo/bar/agg-root" in FIG. 6b is the first path. In another implementation, a conventional YANG data model used to create a subscription request may be extended to add a new parameter. For example, the parameter "aggregation-path" shown in FIG. 6a is added, and the first path is carried by using "aggregation-path". Reference may be made to FIG. 6c for understanding. FIG. 6c is a schematic diagram of an XML of the third message including the YANG data model according to this embodiment of this application. "/foo/bar/agg-root" in FIG. 6c is the first path. A difference from FIG. 6b lies in that "/foo/bar/agg-root" in FIG. 6c is carried by using the extended new parameter "aggregation-path".

Based on the data obtaining method provided in the foregoing embodiment, embodiments of this application further provide a corresponding data obtaining apparatus. The apparatus is described below with reference to accompanying drawings.

FIG. 7 is a schematic diagram of a structure of a data obtaining apparatus according to an embodiment of this application. The data obtaining apparatus 700 shown in FIG. 7 may be disposed in a first device, and may be configured to perform the data obtaining method, performed by the first device, provided in the foregoing embodiment. The data obtaining apparatus 700 shown in FIG. 7 may include, for example, a generation unit 701, a sending unit 702, and a receiving unit 703.

The generation unit 701 is configured to generate a first message, where the first message includes a first keyword. The sending unit 702 is configured to send the first message to a second device. The receiving unit 703 is configured to receive a second message sent by the second device, where the second message includes a first path, and the first path is used to store a parameter determined by the first keyword.

In a possible implementation, the first message further includes a second keyword, and the first path is further used to store a parameter determined by the second keyword.

In a possible implementation, the generation unit 701 is further configured to generate a third message, where the third message includes the first path, the third message is used to indicate the first device to report a parameter set obtained based on the first path, and the parameter set includes one or more parameters; and
the sending unit is further configured to send the third message to the second device.

The apparatus 700 is an apparatus corresponding to the steps performed by the first device provided in the foregoing method embodiment, and specific implementations of the units of the apparatus 700 have a same concept as the steps performed by the first device in the foregoing method embodiment. Therefore, for the specific implementations of the units of the apparatus 700, refer to the descriptions of the steps performed by the first device in the foregoing method embodiment. Details are not described herein again.

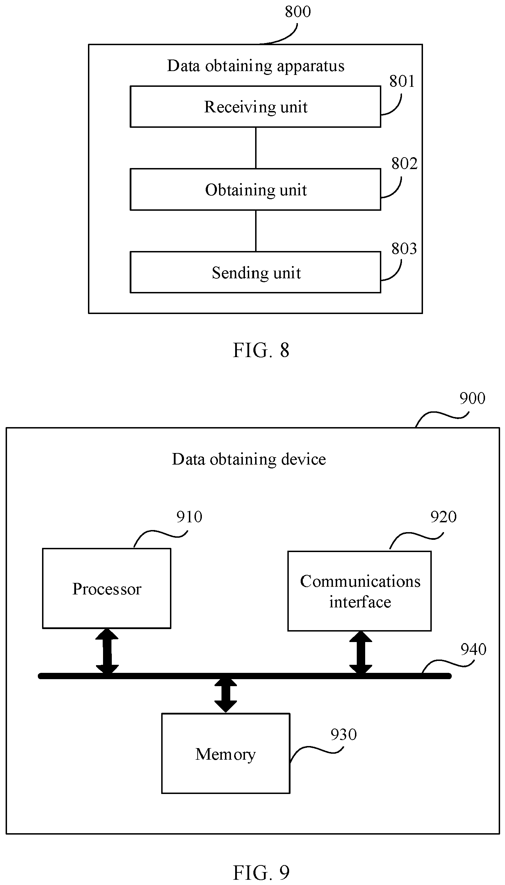

FIG. 8 is a schematic diagram of a structure of a data obtaining apparatus according to an embodiment of this application. The data obtaining apparatus 800 shown in FIG. 8 may be disposed in a second device, and may be configured to perform the data obtaining method, performed by the second device, provided in the foregoing embodiment. The data obtaining apparatus 800 shown in FIG. 8 may include, for example, a receiving unit 801, an obtaining unit 802, and a sending unit 803.

The receiving unit 801 is configured to receive a first message from a first device, where the first message includes a first keyword. The obtaining unit 802 is configured to obtain a first path, where the first path is used to store a parameter determined by the first keyword. The sending unit 803 is configured to send a second message to the first device, where the second message includes the first path.

In a possible implementation, the first message further includes a second keyword, and the obtaining unit 802 is specifically configured to: obtain the first path based on the first keyword; and store a parameter determined by the second keyword into the first path.

In a possible implementation, the first message further includes a second keyword, and the obtaining unit 802 is specifically configured to: determine a second path based on the second keyword, where the second path is used to store a parameter determined by the second keyword; and store the parameter determined by the first keyword into the second path, where the second path is the first path.

In a possible implementation, the first message further includes a second keyword, and the obtaining unit is specifically configured to: obtain, based on the first keyword, the parameter determined by the first keyword; obtain, based on the second keyword, a parameter determined by the second keyword; and store the parameter determined by the first keyword and the parameter determined by the second keyword into the first path. The apparatus 800 is an apparatus corresponding to the steps performed by the second device provided in the foregoing method embodiment, and specific implementations of the units of the apparatus 800 have a same concept as the steps performed by the second device in the foregoing method embodiment. Therefore, for the specific implementations of the units of the apparatus 800, refer to the descriptions of the steps performed by the second device in the foregoing method embodiment. Details are not described herein again.

An embodiment of this application further provides a data obtaining device. The device includes a processor and a memory. The memory is configured to store instructions. The processor is configured to execute the instructions in the memory, to perform the data obtaining method, performed by the first device, provided in the foregoing method embodiment. In some embodiments, the data obtaining device may be the network management device 101 in FIG. 1. An embodiment of this application further provides a data obtaining device. The device includes a processor and a memory. The memory is configured to store instructions. The processor is configured to execute the instructions in the memory, to perform the data obtaining method, performed by the second device, provided in the foregoing method embodiment. In some embodiments, the data obtaining device may be the device 102 in FIG. 1.

It should be noted that a hardware structure of the data obtaining device mentioned above may be a structure shown in FIG. 9. FIG. 9 is a schematic diagram of a structure of a data obtaining device according to an embodiment of this application.

Referring to FIG. 9, the data obtaining device 900 includes a processor 910, a communications interface 920, and a memory 930. There may be one or more processors 910 in the data obtaining device 900. One processor is used as an example in FIG. 9. In this embodiment of this application, the processor 910, the communications interface 920, and the memory 930 may be connected by using a bus system or in another manner. In FIG. 9, an example in which the processor 910, the communications interface 920, and the memory 930 are connected by using a bus system 940 is used.

The processor 910 may be a central processing unit (central processing unit, CPU), a network processor (network processor, NP), or a combination of a CPU and an NP. The processor 910 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory 930 may include a volatile memory (English: volatile memory), for example, a random-access memory (random-access memory, RAM). The memory 930 may alternatively include a non-volatile memory (English: non-volatile memory), for example, a flash memory (English: flash memory), a hard disk drive (hard disk drive, HDD), or a solid-state drive (solid-state drive, SSD). The memory 930 may alternatively include a combination of the foregoing types of memories.

If the data obtaining device 900 is configured to perform the data obtaining method performed by the first device, the memory 930 may store the first keyword, the second keyword, and the like mentioned in the foregoing embodiment. If the data obtaining device 900 is configured to perform the data obtaining method performed by the second device, the memory 930 may store the parameter determined by the first keyword, the parameter determined by the second keyword, and the like mentioned in the foregoing embodiment.

Optionally, the memory 930 stores an operating system and a program, an executable module, or a data structure, or a subset thereof or an extended set thereof. The program may include various operation instructions, and is used to implement various operations. The operating system may include various system programs, to implement various basic services and process hardware-based tasks. The processor 910 may read the program in the memory 930, to implement the data obtaining method that is performed by the first device and that is provided in the embodiments of this application, or implement the data obtaining method that is performed by the second device and that is provided in the embodiments of this application.

The bus system 940 may be a peripheral component interconnect (peripheral component interconnect, PCI) bus, an extended industry standard architecture (extended industry standard architecture, EISA) bus, or the like. The bus system 940 may be classified into an address bus, a data bus, a control bus, and the like. For ease of representation, only one thick line is used for representation in FIG. 9, but this does not mean that there is only one bus or only one type of bus.

An embodiment of this application further provides a computer-readable storage medium, including instructions. When the instructions are run on a computer, the computer is enabled to perform the data obtaining method, performed by the first device, provided in the foregoing embodiment.

An embodiment of this application further provides a computer-readable storage medium, including instructions. When the instructions are run on a computer, the computer is enabled to perform the data obtaining method, performed by the second device, provided in the foregoing embodiment.

An embodiment of this application further provides a computer program product including instructions. When the computer program product is run on a computer, the computer is enabled to perform the data obtaining method, performed by the first device, provided in the foregoing embodiment.

An embodiment of this application further provides a computer program product including instructions. When the computer program product is run on a computer, the computer is enabled to perform the data obtaining method, performed by the second device, provided in the foregoing embodiment.

In this application, terms such as "first", "second", "third", and "fourth" (if any) in the specification, the claims, and the accompanying drawings are intended to distinguish between similar objects but do not necessarily indicate a specific order or sequence. It should be understood that the data termed in such a way is interchangeable in proper circumstances, so that the embodiments described herein can be implemented in orders other than the order illustrated or described herein. In addition, terms "include", "contain", and any other variants mean to cover non-exclusive inclusion, for example, a process, method, system, product, or device that includes a list of steps or units is not necessarily limited to those steps or units expressly listed, but may include other steps or units that are not expressly listed or that are inherent to such a process, method, product, or device.

It may be clearly understood by persons skilled in the art that, for ease and brevity of description, for detailed working processes of the foregoing system, apparatus, and unit, reference may be made to corresponding processes in the foregoing method embodiments, and details are not described herein again.

In the several embodiments provided in this application, it should be understood that the disclosed system, apparatus, and method may be implemented in another manner. For example, the described apparatus embodiment is merely an example. For example, division into the units is merely logical service division, and there may be other division in actual implementation. For example, a plurality of units or components may be combined or may be integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on an actual requirement to achieve the objectives of the solutions in the embodiments.

In addition, service units in the embodiments of this application may be integrated into one processing unit, or each of the units may exist alone physically, or two or more units may be integrated into one unit. The integrated unit may be implemented in a form of hardware, or may be implemented in a form of a software service unit.

When the integrated unit is implemented in the form of a software service unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes a plurality of instructions for instructing a computer device (which may be a personal computer, a server, or a network device) to perform all or some of the steps of the methods in the embodiments of this application. The foregoing storage medium includes: any medium that can store program code, for example, a USB flash drive, a removable hard disk, a read-only memory (ROM, Read-Only Memory), a random access memory (RAM, Random Access Memory), a magnetic disk, or an optical disc.

Persons skilled in the art should be aware that in the foregoing one or more examples, the services described in the present invention may be implemented by using hardware, software, firmware, or any combination thereof. When the present invention is implemented by software, the services may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The objectives, technical solutions, and beneficial effects of the present invention have been described in further detail in the foregoing specific implementations. It should be understood that the foregoing descriptions are merely specific implementations of the present invention.

The foregoing embodiments are merely intended for describing the technical solutions of this application instead of limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A data obtaining method, wherein the method comprises:
generating, by a first device, a first message, wherein the first message comprises a first keyword;
sending, by the first device, the first message to a second device; and
receiving, by the first device, a second message sent by the second device, wherein the second message comprises a first path, and the first path is used to store a parameter determined by the first keyword.

2. The method according to claim 1, wherein the first message further comprises a second keyword, and the first path is further used to store a parameter determined by the second keyword.

3. The method according to claim 1 or 2, wherein the method further comprises:
generating, by the first device, a third message, wherein the third message comprises the first path, the third message is used to indicate the first device to report a parameter set obtained based on the first path, and the parameter set comprises one or more parameters; and
sending, by the first device, the third message to the second device.

4. A data obtaining method, wherein the method comprises:
receiving, by a second device, a first message from a first device, wherein the first message comprises a first keyword;
obtaining, by the second device, a first path, wherein the first path is used to store a parameter determined by the first keyword; and
sending, by the second device, a second message to the first device, wherein the second message comprises the first path.

5. The method according to claim 4, wherein the first message further comprises a second keyword, and the obtaining, by the second device, a first path comprises:
obtaining, by the second device, the first path based on the first keyword; and
storing, by the second device, a parameter determined by the second keyword into the first path.

6. The method according to claim 4, wherein the first message further comprises a second keyword, and the obtaining, by the second device, a first path comprises:
obtaining, by the second device, a second path based on the second keyword, wherein the second path is used to store a parameter determined by the second keyword; and
storing, by the second device, the parameter determined by the first keyword into the second path, wherein the second path is the first path.

7. The method according to claim 4, wherein the first message further comprises a second keyword, and the obtaining, by the second device, a first path comprises:
obtaining, by the second device based on the first keyword, the parameter determined by the first keyword;
obtaining, by the second device based on the second keyword, a parameter determined by the second keyword; and
storing, by the second device, the parameter determined by the first keyword and the parameter determined by the second keyword into the first path.

8. A data obtaining apparatus, wherein the apparatus is disposed in a first device, and the apparatus comprises:
a generation unit, configured to generate a first message, wherein the first message comprises a first keyword;
a sending unit, configured to send the first message to a second device; and
a receiving unit, configured to receive a second message sent by the second device, wherein the second message comprises a first path, and the first path is used to store a parameter determined by the first keyword.

9. The apparatus according to claim 8, wherein the first message further comprises a second keyword, and the first path is further used to store a parameter determined by the second keyword.

10. The apparatus according to claim 8 or 9, wherein
the generation unit is further configured to generate a third message, wherein the third message comprises the first path, the third message is used to indicate the first device to report a parameter set obtained based on the first path, and the parameter set comprises one or more parameters; and
the sending unit is further configured to send the third message to the second device.

11. A data obtaining apparatus, wherein the apparatus is disposed in a second device, and the apparatus comprises:
a receiving unit, configured to receive a first message from a first device, wherein the first message comprises a first keyword;
an obtaining unit, configured to obtain a first path, wherein the first path is used to store a parameter determined by the first keyword; and
a sending unit, configured to send a second message to the first device, wherein the second message comprises the first path.

12. The apparatus according to claim 11, wherein the first message further comprises a second keyword, and the obtaining unit is specifically configured to:
obtain the first path based on the first keyword; and
store a parameter determined by the second keyword into the first path.

13. The apparatus according to claim 11, wherein the first message further comprises a second keyword, and the obtaining unit is specifically configured to:
determine a second path based on the second keyword, wherein the second path is used to store a parameter determined by the second keyword; and
store the parameter determined by the first keyword into the second path, wherein the second path is the first path.

14. The apparatus according to claim 11, wherein the first message further comprises a second keyword, and the obtaining unit is specifically configured to:
obtain, based on the first keyword, the parameter determined by the first keyword;
obtain, based on the second keyword, a parameter determined by the second keyword; and
store the parameter determined by the first keyword and the parameter determined by the second keyword into the first path.
